# EUROPÄISCHE PATENTANMELDUNG

(11) **EP 1 098 294 A2**
(43) Veröffentlichungstag der Anmeldung: **09.05.2001**
(21) Anmeldenummer: 00123893.0
(22) Anmeldetag: 02.11.2000
(51) Int. Cl.: G10K 11/172

(54) **Schalldämmwand und Verwendungen derselben**

(30) Priorität: 02.11.1999 DE 19952689
(71) Anmelder: CWW-GERKO Akustik GmbH & Co. KG, 67547 Worms (DE); Diedrichs, Helmut W., D-64291 Darmstadt (DE)
(72) Erfinder: Diedrichs, Helmut, 64291 Darmstadt (DE); Dopheide, Ralf, Dr., 33649 Bielefeld (DE); Bildner, Karlheinz, 63589 Linsengericht-Grossenhausen (DE)
(74) Vertreter: Schlagwein, Udo, Dipl.-Ing.

(57) **Zusammenfassung**

Bei einer Schalldämmwand mit einer der Schallquelle zugewandten Lochwand (1) und einer Rückwand (3), welche zwischen ihr und der Lochwand (1) einen Luftraum begrenzt, sind die Lochwand (1) und die Rückwand (3) über ihre Fläche durch eine Vielzahl von Klebepunkten (5, 6) miteinander verbunden. Der die Klebepunkte (5, 6) bildende Kleber ist ein hochvernetzter Kunststoffkleber. Diese Schalldämmwand kann als Hitzeschild über Auspuffteile eines Kraftfahrzeugs oder als Stirnwand eines Kraftfahrzeuges eingesetzt werden.

## Beschreibung

Die Erfindung betrifft eine Schalldämmwand mit einer der Schallquelle zugewandten Lochwand und einer Rückwand, welche zwischen ihr und der Lochwand einen Luftraum begrenzt. Weiterhin betrifft die Erfindung zwei Verwendungen der Schalldämmwand.

Schalldämmwände der vorstehenden Art werden beispielsweise als sogenannte Mittenschlucker in Theaterräumen eingesetzt. Sie sind beispielsweise in dem Buch "Die wissenschaftlichen Grundlagen der Raumakustik", Band 1, Hirzel Verlag Stuttgart 1978, insbesondere Seiten 296 - 299, beschrieben. Sie arbeiten mit ähnlichen physikalischen Effekten wie der Helmholtz-Resonators (inhärente Dämpfung).

In Kraftfahrzeugen und bei zahlreichen anderen Anwendungsfällen genügt die mit solchen Schalldämmwänden erreichbare Schallabsorption nicht, vielmehr ist oftmals eine zusätzliche Entdröhnung von Blechflächen durch ein akustisch wirksames Material notwendig, welches Schallenergie in Wärmeenergie umzuwandeln vermag. Üblicherweise bedient man sich in Kraftfahrzeugen Bitumenfolien oder aufgetragenen Bitumenmassen, die beispielsweise auf die Karosseriebleche aufgebracht werden. Nachteilig ist hierbei, dass solche Massen das Gewicht des Kraftfahrzeugs und damit den Kraftstoffverbrauch beträchtlich erhöhen. Weiterhin sind solche Bitumenmassen problematisch, wenn sie in Räumen eingesetzt werden sollen, wo hohe Temperaturen herrschen können, weil sie dann erweichen und zu fließen beginnen. Deshalb ist beispielsweise eine Schalldämpfung mit Bitumenmasse bei einem Hitzeschild oberhalb des Katalysators eines Abgassystemes nicht möglich.

Wie die DE 195 22 889 A1 zeigt, konnte bei Bremsbacken herausgefunden werden, dass Schallschwingungen sich gut mit einer Dämpfschicht von nur 20 µm bis 200 µm aus einem hoch vernetzten Kunststoffkleber dämpfen lassen, wenn man die Trägerplatte der Bremsbacke aus zwei Trägerplattenblechen bildet, die durch diese Dämpfschicht miteinander verklebt sind. Bei Schalldämmwänden führte die Ausbildung von großflächigen Blechen als durch Kunststoffkleber zusammengehaltenes Sandwich jedoch zu einem zu hohen Gewicht der Schalldämmwand und wegen der Kosten des Klebers zu unerwünscht hohen Herstellungskosten.

Der Erfindung liegt das Problem zugrunde, eine Schalldämmwand der eingangs genannten Art so auszubilden, dass sich zusätzlich zu den mit einem Helmholtz-Resonator vergleichbaren Effekten eine möglichst starke Schalldämpfung erreichen lässt, ohne dass die Schalldämmwand dadurch unerwünscht schwer und teuer wird. Weiterhin sollen vorteilhafte Verwendungen dieser Schalldämmwand aufgezeigt werden.

Das erstgenannte Problem wird erfindungsgemäß dadurch gelöst, dass die Lochwand und die Rückwand über ihre Fläche durch eine Vielzahl von Klebepunkten miteinander verbunden sind und dass der die Klebepunkte bildende Kleber ein hochvernetzter Kunststoffkleber ist.

Überraschenderweise zeigte sich, dass ein hochvernetzter Kunststoffkleber bei einer Lochwand auch dann noch zu einer starken Schalldämpfung führt, wenn die Lochwand nicht vollflächig mit einer anderen Wand verklebt ist, sondern lediglich durch eine Vielzahl von Klebepunkten mit der Rückwand verbunden ist. Dadurch lässt sich der Verbrauch an Kunststoffkleber ganz wesentlich reduzieren, was gleichzeitig zu einer wesentlichen Gewichtsersparnis gegenüber Schalldämpfsystemen mit Bitumenschichten oder anderen Kunststoffmassen führt. Dank der Erfindung lassen sich Bleche mit geringem Aufwand entdröhnen, ohne dass die mit einem Helmholtz-Resonator vergleichbaren Effekte verloren geht.

Eine sehr gute Schalldämpfung lässt sich bei geringem Klebstoffverbrauch erreichen, wenn die Klebepunkte eine Schichtstärke von etwa 20 µm bis 200 µm aufweisen.

Die erfindungsgemäße Schalldämmwand vermag hohen Temperaturen bis zu 400 °C zu widerstehen, wenn gemäß einer anderen Weiterbildung der Erfindung der Kleber ein peroxidisch vernetzter Silikonkleber ist und eine Schichtstärke von etwa 100 µm hat.

Die erfindungsgemäße multifunktionelle Schalldämmwand vermag sowohl Schall zu absorbieren und zu dämpfen, als auch wirkungsvoll Hitze abzuschirmen, wenn die Löcher in der Lochwand einen Durchmesser von weniger als 0,8 mm aufweisen. Solche Löcher erfüllen noch die bei einem Helmholtz-Resonator bestehenden Erfordernisse zur Schallabsorption, lassen jedoch kaum Wärme in die Schalldämmwand eindringen, so dass sich ihre Wärmeisolationswirkung gegenüber einer ungelochten Wand kaum verschlechtert.

Zur Erzeugung des Luftraumes muss die Rückwand Abstand von der Lochwand haben. Das kann man mit geringem Aufwand dadurch erreichen, dass der Luftraum hinter der Lochwand durch ein durch die Klebepunkte mit der Lochwand verbundenes Profilblech gebildet ist.

Als besonders wirkungsvoll hat sich eine Schalldämmwand erwiesen, bei der das Profilblech über seine Fläche Noppen aufweist und der Luftraum durch die Innenräume der zur Lochwand hin offenen Noppen gebildet ist. Ein zusätzlicher Vorteil der Noppenausbildung und des punktförmigen Verklebens liegt in der Verbesserung der Wärmeisolation, da die sich berührenden Flächen klein sind und der Kleber einen direkten Kontakt der Metalle verhindert.

Falls der Luftraum hinter der Lochwand durch das Noppenblech oder auf andere Weise abgeschlossen ist, dann kann man auch vorsehen, dass auf beiden Seiten des Profilbleches eine Lochwand durch die Klebepunkte befestigt ist.

Die Lochwand braucht nicht zwingend eine ebene Platte zu sein. Gemäß einer anderen, vorteilhaften Weiterbildung der Erfindung kann man auch vorsehen, dass die Lochwand profiliert ausgebildet ist und durch die Klebepunkte mit einer geschlossenen Wandfläche verbunden ist.

Besonders vorteilhaft ist die Verwendung der erfindungsgemäßen Schalldämmwand als Hitzeschild zur Abschirmung von Abgas führenden Teilen eines Abgassystems eines Kraftfahrzeugs, weil dann ihre Wirkung als Hitzeschild und Schalldämpfelement sehr gut zum Tragen kommt.

Die Herstellungskosten und das Gewicht eines Kraftfahrzeugs lassen sich insgesamt reduzieren, wenn man die erfindungsgemäße Schalldämmwand als Stirnwand einer Kraftfahrzeugkarosserie verwendet. Dabei kann man diese Schalldämmwand an Stelle des bisher verwendeten und durch Bitumenfolien oder mit Absorptionsmaterial wie Kunststoffschäumen beschichteten Bleches einsetzen, so dass insgesamt sogar Gewicht eingespart wird und es zu einer verbesserten Schalldämpfung und Entdröhnung kommt. Der Einsatz der erfindungsgemäßen Schalldämmwand ist jedoch nicht auf diese beiden Anwendungsfälle begrenzt. Man kann sie auch zur Bildung anderer Karosseriebereiche benutzen, beispielsweise ein Kraftfahrzeugdach als Schalldämmwand mit den erfindungsgemäßen Merkmalen ausbilden, um dort Dröhngeräusche auszuschließen.

Vorteilhaft ist es auch, wenn die Löcher der beiden Lochbleche auf den gegenüberliegenden Seiten der Schalldämmwand unterschiedlichen Durchmesser haben. Hierdurch kann man die Schalldämmwand wahlweise mit der einen oder anderen Seite zur Schallquelle weisend montieren und sich dadurch der Frequenz der Schallquelle anpassen. Weiterhin lässt sich eine Schalldämpfung in zwei durch die Schalldämmwand begrenzten Räumen erreichen.

Eine weitere Optimierung der Schalldämpfeffekte lässt sich dadurch ermöglichen, dass die Noppen in ihren nicht das Lochblech oder die Rückwand berührenden Seiten Löcher aufweisen.

Die Erfindung lässt verschiedene Ausführungsformen zu. Zur weiteren Verdeutlichung ihres Grundprinzips sind zwei davon in der Zeichnung dargestellt und werden nachfolgend beschrieben. Die Zeichnung zeigt in
- Fig.1: einen Schnitt durch eine erste Ausführungsform einer Schalldämmwand nach der Erfindung,
- Fig.2: einen Schnitt durch eine zweite Ausführungsform der Schalldämmwand nach der Erfindung.

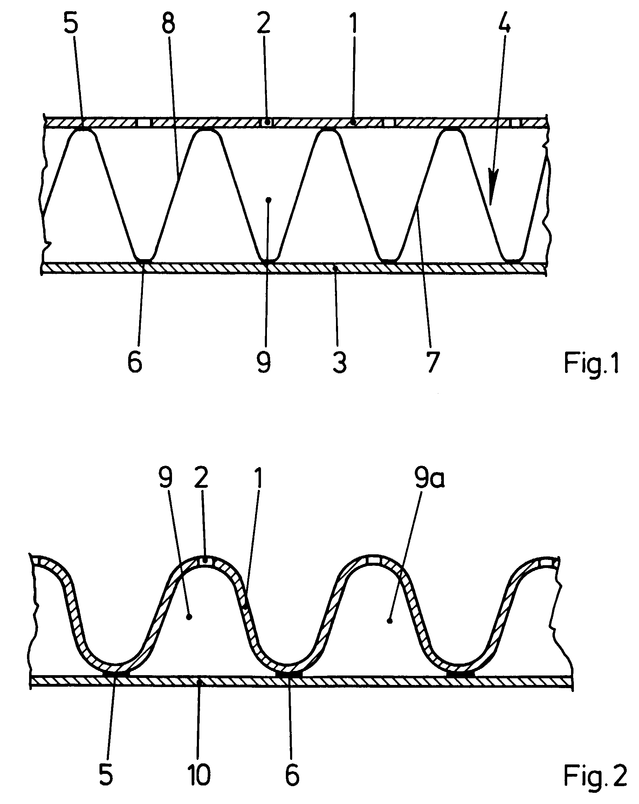

Die in Figur 1 im Schnitt teilweise gezeigte Schalldämmwand hat zur Seite der Schallquelle hin eine Lochwand 1 mit Löchern 2. Mit Abstand zu der Lochwand 1 verläuft eine Rückwand 3. Zwischen der Lochwand 1 und der Rückwand 3 wird ein als Noppenblech ausgebildetes Profilblech 4 eingeschlossen, gegen das die Lochwand 1 und die Rückwand 3 anliegen. Klebepunkte 5, 6 verbinden das Profilblech 4 mit der Lochwand 1 und der Rückwand 3.

Das als Noppenblech ausgebildete Profilblech 4 hat abwechselnd zur einen und anderen Seite hin gerichtete Noppen 7, 8, die entweder zur Seite der Lochwand 1 oder der Rückwand 3 hin einen geschlossenen Innenraum 9 bilden.

Bei der Ausführungsform nach Figur 2 ist die Lochwand 1 profiliert ausgebildet und liegt in regelmäßigen Abständen auf einer geschlossenen Wandfläche 10 auf, mit der sie wiederum durch die Klebepunkte 5, 6 verbunden ist. Dadurch entstehen Innenräume 9, 9a, die in Verbindung mit den Löchern 2 als Helmholtz-Resonatoren wirken, während die Klebepunkte die Funktion einer Schalldämpfung erfüllen.

Wenn der Kleber hochtemperaturbeansprucht ist, beispielsweise bei Verwendung als Hitzeschild oberhalb eines Katalysators eines Abgassystems eines Kraftfahrzeugs, dann handelt es sich bei ihm vorteilhafterweise um einen peroxidisch vernetzten Siliconkleber. Bei geringerer Temperaturbeanspruchung, beispielsweise bei Verwendung als Stirnwand eines Kraftfahrzeugs, kann man einen kostengünstigeren Kleber verwenden, beispielsweise peroxidisch vernetzter Polyacrylatkleber.

### Bezugszeichenliste

- 1: Lochwand
- 2: Loch
- 3: Rückwand
- 4: Profilblech
- 5: Klebepunkt
- 6: Klebepunkt
- 7: Noppe
- 8: Noppe
- 9: Innenraum
- 10: Wandfläche

## Patentansprüche

1. Schalldämmwand mit einer der Schallquelle zugewandten Lochwand und einer Rückwand, welche zwischen ihr und der Lochwand einen Luftraum begrenzt, **dadurch gekennzeichnet**, dass die Lochwand (1) und die Rückwand (3) über ihre Fläche durch eine Vielzahl von Klebepunkten (5, 6) miteinander verbunden sind und dass der die Klebepunkte (5, 6) bildende Kleber ein hochvernetzter Kunststoffkleber ist.

2. Schalldämmwand nach Anspruch 1, **dadurch gekennzeichnet**, dass die Klebepunkte (5, 6) eine Schichtstärke von etwa 20 µm bis 200 µm aufweisen.

3. Schalldämmwand nach den Ansprüchen 1 oder 2, **dadurch gekennzeichnet**, dass der Kleber ein peroxidisch vernetzter Silikonkleber ist und eine Schichtstärke von etwa 100 µm hat.

4. Schalldämmwand nach zumindest einem der vorangehenden Ansprüche, **dadurch gekennzeichnet**, dass die Löcher (2) in der Lochwand (1) einen Durchmesser von weniger als 0,8 mm aufweisen.

5. Schalldämmwand nach zumindest einem der vorangehenden Ansprüche, **dadurch gekennzeichnet**, dass der Luftraum hinter der Lochwand (1) durch ein durch die Klebepunkte (5, 6) mit der Lochwand (1) verbundenes Profilblech (4) gebildet ist.

6. Schalldämmwand nach Anspruch 5, **dadurch gekennzeichnet**, dass das Profilblech (4) über seine Fläche Noppen (7, 8) aufweist und der Luftraum durch die Innenräume (9) der zur Lochwand (1) hin offenen Noppen (7) gebildet ist.

7. Schalldämmwand nach zumindest einem der vorangehenden Ansprüche, **dadurch gekennzeichnet**, dass auf beiden Seiten des Profilbleches (4) ein Lochblech (1) durch die Klebepunkte (5, 6) befestigt ist.

8. Schalldämmwand nach Anspruch 7, **dadurch gekennzeichnet**, dass die Löcher der beiden Lochbleche (1) auf den gegenüberliegenden Seiten der Schalldämmwand unterschiedlichen Durchmesser haben.

9. Schalldämmwand nach zumindest einem der vorangehenden Ansprüche, **dadurch gekennzeichnet**, dass die Noppen (7, 8) in ihren nicht das Lochblech (1) oder die Rückwand (3) berührenden Seiten Löcher aufweisen.

10. Schalldämmwand nach zumindest einem der vorangehenden Ansprüche, **dadurch gekennzeichnet**, dass die Lochwand (1) profiliert ausgebildet ist und durch die Klebepunkte (5, 6) mit einer geschlossenen Wandfläche (10) verbunden sind.

11. Verwendung der Schalldämmwand nach zumindest einem der vorangehenden Ansprüche als Hitzeschild zur Abschirmung von Abgas führenden Teilen eines Abgassystems eines Kraftfahrzeugs.

12. Verwendung der Schalldämmwand nach zumindest einem der vorangehenden Ansprüche als Stirnwand einer Kraftfahrzeugkarosserie.
